# FASCICULE DE BREVET EUROPEEN

(11) **EP 2 254 374 B1**
(45) Date de publication et mention de la délivrance du brevet: **21.03.2012**
(21) Numéro de dépôt: 10161231.5
(22) Date de dépôt: 27.04.2010
(51) Int. Cl.: H04W 48/20

(54) **Système et procédé de sélection préférentielle d'une femto-cellule d'un réseau par un terminal mobile connecté au réseau**
System und Prozess der bevorzugten Auswahl einer fem Zelle eines Netzes von einem beweglichen Terminal am Netz in Verbindung stehend
System and process of preferential selection of a fem-to cell of a network from a mobile terminal connected at the network

(30) Priorité: 18.05.2009 FR 0902397
(43) Date de publication de la demande: 24.11.2010
(73) Titulaire: Societé Française du Radiotéléphone, 75008 Paris (FR)
(72) Inventeur: Laune, Marthe, 78000, VERSAILLES (FR); Fattouch, Imad, 75013, PARIS (FR); Elghazi, Abdelmjid, 95100, ARGENTEUIL (FR)
(74) Mandataire: Debay, Yves

(56) Documents cités:
- US-A1- 2004 162 074
- QUALCOMM EUROPE: "Measurement and mobility issues for home (e)Node Bs" 3GPP DRAFT; R2-074117, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20071002, 2 octobre 2007 (2007-10-02), XP050136747

## Description

La présente invention se rapporte au domaine des systèmes de sélection préférentielle d'une cellule par un terminal mobile à et plus particulièrement au domaine des systèmes de resélection préférentielle d'une cellule au détriment d'une cellule de plus haute priorité telle qu'une femto-cellule.

Les femto-cellules peuvent être définies comme des cellules radioélectriques qui permettent notamment d'élargir la portée des systèmes d'accès numériques distribués dans un espace de dimensions limitées. Une femto-cellule est, comme son nom l'indique, une cellule radio avec une puissance inférieure à celle d'une antenne relais capable d'assurer la communication à faible puissance entre l'intérieur et une liaison extérieure pour, entre autres, les technologies 2G (seconde génération) et 3G (troisième génération) et relayer à l'intérieur de l'entreprise ou du domicile, les flux numériques du réseau fixe vers le mobile en supprimant la nécessité d'avoir des terminaux dédiés. A l'origine de la femto-cellule, la « femto-station » forme la base du réseau des communications cellulaires installées dans l'espace délimité qui crée par son fonctionnement cette petite cellule. Ces « femto-stations » sont connectables au réseau par une liaison filaire d'accès en ADSL (*Asymmetric Digital Subscriber Line*) ou une liaison à fibres optiques ou par un modem optique ou par un modem câble. Le réseau de communication comprend tout un ensemble d'équipements qui traitent l'information, la gèrent, la transportent, la stockent tout en permettant la connexion et l'intégration de tous ces équipement de façon cohérente. Une passerelle est utilisée pour gérer les équipements domestiques qui doivent interfonctionner en protocole IP (*Internet Protocol*) à un moment ou à un autre, soit par câblages adaptés ou par des liaisons radioélectriques internes à l'espace de fonctionnement de la femto-cellule.

C'est ainsi que les femto-cellules permettent également de former des points d'accès qui intègrent plusieurs technologies, imposant du même coup la miniaturisation, l'intégration et la convergence de média, fixe et mobile. Ces femto-cellules ont notamment pour objectif d'être utilisées comme points d'accès 2G et 3G intégrés dans un boîtier de fournisseur d'accès ADSL pour améliorer automatiquement la couverture des téléphones mobiles de troisième génération, permettant la bascule des communications utilisant un terminal mobile standard sur le réseau d'accès IP au lieu de passer sur les antennes des opérateurs. Les femto-cellules utilisent ainsi le haut débit pour fournir des services voix et données de la même manière qu'une station BTS (*Base Transceiver Station*) ou node B d'un macro-réseau en encapsulant le trafic de la téléphonie mobile sur un réseau Internet. L'utilisation de telles femto-cellules permet alors de s'affranchir d'antennes surpuissantes en quelques lieux au profit d'une multitude de « mini-antennes » qui sont éparpillées à travers l'ensemble d'une zone réalisant alors une amélioration du maillage du réseau et de leur capacité de débit.

A l'heure actuelle, certains terminaux mobiles sont sensibles à un paramétrage de priorisation du réseau, appelé H.C.S. (*Hierarchical Cell Structure*) qui paramètre les différentes cellules (femto, macro, micro) détectée par le terminal en leur imposant une hiérarchie de sorte que le terminal est orienté pour se connecter préférentiellement avec la cellule estampillée avec la plus haute priorité. Cependant, les femto-cellules ont comme particularité de fonctionner selon deux modes différents. Un premier mode, ouvert, dit communautaire, autorise l'accès de la femto-cellule à n'importe quel terminal mobile adapté. Un autre mode, qui, lui, est fermé, restreint cet accès de la cellule à un ensemble de terminaux mobiles bien définis, par exemple par leur abonnement. Ce rejet s'opère généralement par le déclenchement de procédures de type « *Location Update Reject* », comme par exemple le système décrit dans le document US 7,062,270 intitulé *System and method for controlling domestic roaming* qui propose l'intégration d'une base de données à proximité d'un HLR (*Home Location Register*), cette base de données comprenant une autorisation ou une interdiction de connexion à une portion du réseau pour toute requête définie par un ensemble de données (IMSI, VLR Add, LAI). Toutefois, cette restriction d'accès a comme inconvénient d'entrainer un problème de fonctionnement de certains terminaux mobiles avec le réseau. En effet, d'une part le paramétrage de priorisation oriente la connexion du terminal mobile vers la couche du réseau constituée par la femto-cellule et d'autre part la femto-cellule, si celle-ci opère selon un mode fermé, refoule la connexion du terminal mobile vers une autre cellule. Cependant, cette situation peut conduire au blocage de la connexion du terminal mobile entre deux couches du réseau qui empêche l'accès du terminal à une partie fonctionnelle du réseau suspendant toute émission et réception d'appel avec le terminal et aboutit à la rupture de la communication en cours du terminal mobile. De plus, les resélections successives des cellules prioritaires du réseau par le terminal mobile génèrent une consommation d'énergie qui conduit à un épuisement plus rapide des batteries. Un autre système est décrit dans le document US 2004 162 074 (19-08-2004)

La présente invention a pour objet de supprimer un ou plusieurs inconvénients de l'art antérieur et notamment de proposer une solution qui permette à un terminal mobile d'effectuer une sélection préférentielle d'une cellule d'un réseau et notamment en évitant tout risque de blocage de la connexion du terminal entre deux couches du réseau.

Cet objectif est atteint grâce à un système de sélection préférentielle d'une cellule d'un réseau par un terminal connecté au réseau, ce terminal recevant parmi plusieurs paramétrages du réseau au moins :
- un paramétrage de type HCS pour générer une priorisation des différentes cellules qui constituent le réseau en définissant une valeur pour chacune des cellules du réseau et favoriser par anticipation le choix par le terminal lors d'une sélection ou d'une re-sélection, des cellules susceptibles d'être utilisées pour effectuer ou poursuivre une communication, et
- un paramétrage de type QOffset pour modifier l'indice de qualité de champ d'au moins une des cellules détectées par le terminal et favoriser l'une d'entre elle,
caractérisé en ce que le système intègre :
- un dispositif de combinaison du paramétrage HCS avec le paramétrage QOffset.

Un autre objectif de l'invention est de proposer un procédé permette la mise en oeuvre du système de l'invention.

Cet objectif est atteint grâce à un procédé de sélection préférentielle d'une cellule d'un réseau mettant en jeu un système de sélection selon l'invention, le procédé comprenant :
- une étape de réception par le terminal d'au moins un paramétrage du réseau incluant le paramétrage HCS destiné à générer une priorisation des différentes cellules qui constituent le réseau en définissant une valeur pour chacune des cellules du réseau,
- une étape de détection par le terminal de la présence d'au moins une cellule de plus haute priorité parmi les cellules du réseau qu'il reconnaît,
caractérisé en ce que le procédé comprend notamment :
- une étape de réception par le terminal d'au moins un paramétrage QOffset du réseau,
- une étape de modification de l'indice de qualité de champ d'au moins une cellule détectée par le terminal de sorte que la cellule de plus haute priorité soit reconnue par le terminal avec un indice de qualité de champ au moins égal à celui d'une cellule de priorité moins élevée et détectée par le terminal.

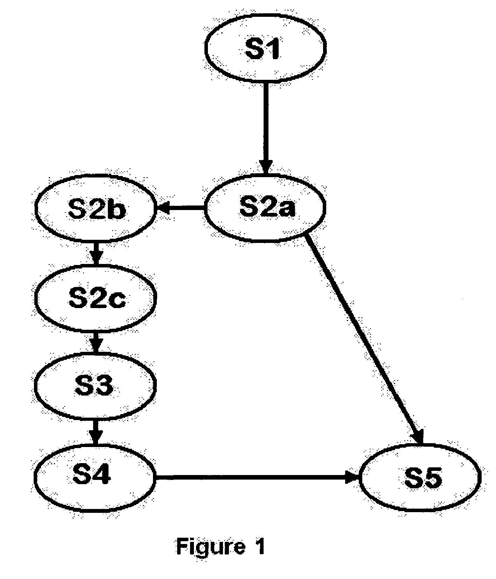

L'invention, avec ses caractéristiques et avantages, ressortira plus clairement à la lecture de la description faite en référence au dessin annexé dans lequel la figure 1 représente un schéma de la mise en oeuvre du procédé de l'invention.

Les femto-cellules émettent dans le réseau UMTS sur une couche porteuse de couverture qui diffère de celle des autres cellules, c'est à dire macro-cellules, micro-cellules ou autres, qui, elles, viennent en couches de capacités inférieures.

La capture des femto-cellules par les terminaux mobiles s'effectue en faisant intervenir des mécanismes de priorisation principalement géré par le paramétrage HCS (Hierarchical Cell Structure) du réseau. Ce mécanisme normalisé par le standard 3GPP consiste à avantager certaines cellules au détriment d'autres lors de sélection ou de re-sélection de cellules du réseau. Ce mécanisme de priorisation est indépendant de la qualité et du niveau de signal radio de chacune des cellules priorisées. Une valeur de priorité, par exemple comprise entre 0 et 7, est attribuée par le HCS à chacune des cellules du réseau, de sorte qu'à partir de ce paramétrage du réseau la re-sélection par le terminal est anticipée, ce denier ne choisissant comme cellules candidates pour sa re-sélection que les cellules les plus prioritaires. En pratique, le terminal choisi successivement, selon une hiérarchie décroissante :
- les cellules du réseau 3G présentant la plus haute priorité en l'occurrence les femto-cellules,
- les cellules du réseau 3G positionnées sur des porteuses inférieures comme par exemple des macro-cellules,
- les cellules positionnées sur des porteuses de réseau 2G.

Lors d'une re-sélection par un terminal, la réception du paramétrage HCS (S1) permet d'aboutir à une détection (S2a) de la présence d'une femto-cellule comme cellule de plus haute priorité parmi les différentes cellules du réseau qui entourent la cellule porteuse du terminal mobile. En absence de détection d'une femto-cellule, la re-sélection par le terminal aboutit à la bascule (S5) de la connexion du terminal vers une cellule de priorité moins élevée que celle d'une femto-cellule. La détection (S2a) de la présence d'une femto-cellule comme cellule de plus haute priorité s'effectue grâce au paramétrage HCS qui permet la hiérarchisation ou priorisation des cellules.

En revanche, la détection (S2a) d'une femto-cellule entraîne un déclenchement (S2c) automatique de la transmission (S3) du paramétrage QOffset du réseau au terminal. Ce paramétrage QOffset est un paramétrage défini dans la procédure standard de re-sélection des cellules 3G pour favoriser la sélection d'une cellule sur le plan qualitatif du signal radio. Il intervient pour biaiser les indices de qualité de champ mesurés sur des cellules candidates voisines de la cellule porteuse et favoriser la re-sélection d'une des cellules candidates en la faisant passer pour meilleure grâce à une amélioration de son indice de qualité de champ par rapport à son indice de qualité de champ réel mesuré.

Selon un mode de réalisation préféré, le système de l'invention comprend un dispositif de nivellement de la priorisation réalisée par le paramétrage de type HCS ou d'annulation du paramétrage de type HCS associé à aux cellules détectées. Ce nivellement (S2b) de la priorisation, une fois que la détection d'une cellule de plus haute priorité est effectuée, par exemple une femto-cellule, permet de définir un niveau de priorité identique entre une cellule détectée avec une plus haute priorité et une cellule détectée de priorité inférieure, par exemple une femto-cellule et une macro-cellule.

La réception (S3) du paramétrage QOffset du réseau par le terminal au niveau d'un dispositif de combinaison des paramètres HCS et QOffset de modifier (S4) l'indice de qualité de champ de la femto-cellule détectée de sorte que l'indice de qualité de champ de cette dernière soit reconnue par le terminal avec un indice de qualité de champ au moins égal à celui d'une cellule détectée par le terminal avec une priorité moins élevée. Cette cellule détectée avec une priorité inférieure peut être, par exemple, une macro-cellule du réseau. La cellule détectée avec une priorité inférieure présentant un indice de qualité de champ équivalent ou supérieur à celui de la cellule détectée avec une plus haute priorité qu'est la femto-cellule, la re-sélection par le terminal est alors orientée préférentiellement vers une bascule (S5) de la connexion du terminal vers une cellule détectée avec une priorité moins élevée que celle d'une femto-cellule. Ce procédé de basculement de re-sélection permet d'empêcher tout risque de blocage de la connexion du terminal entre deux couches du réseau. Les terminaux qui ne sont pas autorisés à se connecter à une femto-cellule particulière sont alors en mesure de re-sélectionner une cellule du réseau macro, puisque celui-ci présente sur au moins une de ses cellules un indice de qualité de champ égal voire supérieur à celui de la femto-cellule détectée.

Le dispositif de combinaison des paramètres HCS et Qoffset permet l'utilisation du paramétrage HCS pour reconnaître le degré de priorité des cellules pour déclencher l'utilisation du paramétrage Qoffset, mais également pour niveler la priorisation et annuler la prise en compte du paramétrage HCS dans le cadre d'une re-selection selon l'invention.

L'utilisation seule d'un paramétrage QOffset par un terminal mobile, indépendamment du paramétrage HCS pour trouver une cellule avec une connexion optimale, impose une mesure des champs et un pondérage par le QOffset de l'ensemble des cellules voisines de la cellule porteuse pour chaque nouvelle cellule porteuse du réseau utilisé par le terminal. Par ailleurs, cette mesure doit être opérée en permanence, en présence ou non d'une femto-cellule dans le voisinage de la cellule porteuse, afin de pouvoir fonctionner dans le cas où une femto-cellule se trouve à être voisine de la cellule porteuse du terminal. Un tel fonctionnement conduit alors à une consommation importante des ressources en énergie et à un épuisement rapide des batteries du terminal. La combinaison de l'utilisation du paramétrage QOffset avec le paramétrage HCS permet ainsi de n'enclencher une procédure de scannage des indices de qualité de champ de la part du terminal mobile que lorsque le terminal mobile est véritablement en présence d'une femto-cellule.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Système de sélection préférentielle d'une cellule d'un réseau par un terminal connecté au réseau, ce terminal recevant parmi plusieurs paramétrages du réseau au moins :
- un paramétrage de type HCS pour générer une priorisation des différentes cellules qui constituent le réseau en définissant une valeur pour chacune des cellules du réseau et favoriser par anticipation le choix par le terminal lors d'une sélection ou d'une re-sélection, des cellules susceptibles d'être utilisées pour effectuer ou poursuivre une communication, et
- un paramétrage de type QOffset pour modifier l'indice de qualité de champ d'au moins une des cellules détectées par le terminal et favoriser l'une d'entre elle,
**caractérisé en ce que** le système intègre :
- un dispositif de combinaison du paramétrage HCS avec le paramétrage QOffset, le dispositif de combinaison du paramétrage HCS avec le paramétrage QOffset opère en modifiant l'indice de qualité de champ de la cellule détectée par le terminal et présentant la plus haute priorité, de sorte que la cellule détectée soit reconnue par le terminal avec un indice de qualité de champ au moins égal à celui d'une cellule de priorité moins élevée et détectée par le terminal.

2. Système de sélection préférentielle d'une cellule d'un réseau selon la revendication précédente, **caractérisé en ce que** le dispositif de combinaison du paramétrage HCS avec le paramétrage QOffset opère de sorte que la cellule détectée par le terminal et étant une femto-cellule, soit reconnue par le terminal avec un indice de qualité de champ au moins égal à celui d'une macro-cellule détectée par le terminal.

3. Système de sélection préférentielle d'une cellule d'un réseau selon une des revendications précédentes, **caractérisé en ce que** le dispositif de combinaison est programmé pour n'opérer qu'en cas de détection d'au moins une femto-cellule lors de la réception du paramétrage HCS par le terminal.

4. Système de sélection préférentielle d'une cellule d'un réseau selon une des revendications précédentes, **caractérisé en ce que** le système comprend un dispositif de nivellement de la priorisation effectuée par le paramétrage de type HCS pour au moins deux cellules détectées avec des priorités différentes et/ou un dispositif d'annulation du paramétrage de type HCS associé à au moins une cellule détectée.

5. Système de sélection préférentielle d'une cellule d'un réseau selon une des revendications précédentes, **caractérisé en ce que** le système de sélection et son dispositif de combinaison sont embarqués dans un terminal.

6. Système de sélection préférentielle d'une cellule d'un réseau selon une des revendications précédentes, **caractérisé en ce que** le système de sélection et son dispositif de combinaison sont intégrés au réseau.

7. Procédé de sélection préférentielle d'une cellule d'un réseau mettant en jeu un système de sélection préférentielle selon une des revendications précédentes, le procédé comprenant :
- une étape de réception (S1) par le terminal d'au moins un paramétrage du réseau incluant le paramétrage HCS destiné à générer une priorisation des différentes cellules qui constituent le réseau en définissant une valeur pour chacune des cellules du réseau,
- une étape de détection (S2a) par le terminal de la présence d'au moins une cellule de plus haute priorité parmi les cellules du réseau qu'il reconnaît, une étape de réception par le terminal d'au moins un paramétrage QOffset du réseau,
**caractérisé en ce que** le procédé comprend notamment :
- une étape de modification (S4) de l'indice de qualité de champ d'au moins une cellule détectée par le terminal de sorte que la cellule de plus haute priorité soit reconnue par le terminal avec un indice de qualité de champ au moins égal à celui d'une cellule de priorité moins élevée et détectée par le terminal.

8. Procédé de sélection préférentielle selon la revendication précédente, **caractérisé en ce que** la cellule de plus haute priorité détectée est une femto-cellule.

9. Procédé de sélection préférentielle selon une des revendications précédentes, la cellule détectée de plus haute priorité étant une femto-cellule, **caractérisé en ce que** le procédé comprend notamment :
- une étape de déclenchement (S2c) de la réception (S3) d'un paramétrage QOffset tributaire de la détection d'une cellule de plus haute priorité par le terminal à réception d'un paramétrage HCS.

10. Procédé de sélection préférentielle selon une des revendications précédentes, **caractérisé en ce que** le procédé comprend notamment, préalablement à l'étape de modification (S4) de l'indice de qualité de champ :
- une étape de nivellement (S2b) de la priorisation effectuée par le paramétrage de type HCS pour au moins deux cellules détectées avec des priorités différentes et/ou d'annulation du paramétrage de type HCS associé à au moins une cellule détectée.

11. Procédé de sélection préférentielle selon une des revendications précédentes, **caractérisé en ce que** le procédé comprend notamment :
- une étape de bascule (S5) de la connexion du terminal vers une cellule de priorité moins élevée que celle de la cellule de plus haute priorité mais d'indice de qualité de champ au moins égal à celui de la cellule de plus haute priorité.

## Claims

1. System for preferred selection of a cell of a network by a terminal connected to the network; this terminal receiving among several parameterizations of the network at least;
- parameterization of HCS type to generate prioritization of the different constituent cells of the network by defining a value for each of the cells of the network, and for selection or re-selection to favour by anticipation the choosing by the terminal of those cells able to be used to carry out or continue a communication, and
- parameterization of QOffset type to modify the field quality index of at least one of the cells detected by the terminal and to favour one thereof,
**characterized in that** the system integrates:
- a device for combining HCS parameterization with QOffset parameterization, the device for combining HCS parameterization with QOffset parameterization operates by modifying the field quality index of the cell detected by the terminal and having the highest priority, so that the detected cell is recognized by the terminal with a field quality index at least equal to that of a cell with lower priority and detected by the terminal.

2. The system for preferred selection of a cell of a network according to the preceding claim, **characterized in that** the device for combining HCS parameterization with QOffset parameterization operates so that the cell detected by the terminal and being a femtocell is recognized by the terminal with a field quality index at least equal to that of a macro-cell detected by the terminal:

3. The system for preferred selection of a cell of a network according to one of the preceding claims, **characterized in that** the device for combining is programmed so as only to operate in the event of detection of at least one femtocell on receiving of HCS parameterization by the terminal.

4. The system for preferred selection of a cell of a network according to one of the preceding claims, **characterized in that** the system comprises a device for prioritization levelling performed by parameterization of HCS type for at least two detected cells having different priorities and/or a device for cancelling HCS-type parameterization associated with at least one detected cell.

5. The system for preferred selection of a cell of a network according to one of the preceding claims, **characterized in that** the system for selection and its device for combining are embedded in a terminal.

6. The system for preferred selection of a cell of a network according to one of the preceding claims, **characterized in that** the system for selection and its device for combining are integrated in the network.

7. A method for preferred selection of a cell of a network using a system for preferred selection according to one of the preceding claims, the method comprising:
- a receiving step (S1) by the terminal of at least one parameterization of the network including the HCS parameterization intended to generate prioritization of the different constituent cells of the network by defining a value for each of the cells of the network,
- a detection step (S2a) by the terminal of the presence of at least one cell having highest priority among the cells of the network it recognizes,
- a receiving step by the terminal of at least one QOffset parameterization of the network,
**characterized in that** the method particularly comprises:
- a modification step (S4) of the field quality index of at least one cell detected by the terminal so that the cell with highest priority is recognized by the terminal with a field quality index at least equal to that of a cell of lower priority and detected by the terminal.

8. The method for preferred selection according to the preceding claim, **characterized in that** the detected cell with highest priority is a femtocell.

9. The method for preferred selection according to one of the preceding claims, the detected cell with highest priority being a femtocell, **characterized in that** the method particularly comprises:
- a triggering step (S2c) to trigger receipt (S3) of QOffset parameterization dependent upon detection of a cell of highest priority by the terminal on receiving a HCS parameterization.

10. The method for preferred selection according to one of the preceding claims, **characterized in that** the method particularly comprises, prior to the modification step (S4) to modify the field quality index:
- a prioritization levelling step (S2b) performed by the HCS-type parameterization for at least two detected cells with different priorities and/or cancellation of the HCS-type parameterization associated with at least one detected cell.

11. The method for preferred selection according to one of the preceding claims, **characterized in that** the method particularly comprises:
- a switchover step (S5) of the terminal connection towards a cell of lower priority than the cell of highest priority but having a field quality index at least equal to that of the cell having highest priority.

## Patentansprüche

1. System der bevorzugten Auswahl einer Zelle eines Netzes durch ein mit dem Netz verbundenes Endgerät, wobei dieses Endgerät von mehreren Parametrierungen des Netzes mindestens empfängt:
- eine Parametrierung vom Typ HCS, um durch Definition eines Werts für jede der Zellen des Netzes eine Priorisierung der verschiedenen Zellen, die das Netz bilden, zu erzeugen und durch Vorgriff der Wahl durch das Endgerät bei einer Auswahl oder Wiederauswahl Zellen zu begünstigen, die zur Durchführung oder Weiterführung einer Kommunikation verwendet werden könnten, und
- eine Parametrierung vom Typ QOffset, um den Feldqualitätsindex mindestens einer der vom Endgerät ermittelten Zellen zu ändern und eine von ihnen zu begünstigen,
**dadurch gekennzeichnet, dass** das System integriert:
- eine Kombinationsvorrichtung der Parametrierung HCS mit der Parametrierung QOffset, wobei die Kombinationsvorrichtung der Parametrierung HCS mit der Parametrierung QOffset durch Änderung des Feldqualitätsindexes der vom Endgerät ermittelten Zelle arbeitet und die höchste Priorität präsentiert, so dass die ermittelte Zelle vom Endgerät mit einem Feldqualitätsindex erkannt wird, der mindestens dem einer Zelle mit einer weniger hohen Priorität, vom Endgerät ermittelten Zelle entspricht.

2. System der bevorzugten Auswahl einer Zelle eines Netzes nach vorangehendem Anspruch, **dadurch gekennzeichnet, dass** die Kombinationsvorrichtung der Parametrierung HCS mit der Parametrierung QOffset derart arbeitet, dass die vom Endgerät ermittelte Zelle, die eine Femtozelle ist, vom Endgerät mit einem Feldqualitätsindex erkannt wird, der mindestens dem einer vom Endgerät ermittelten Makrozelle entspricht.

3. System der bevorzugten Auswahl einer Zelle eines Netzes nach einem der vorangegangenen Ansprüche, **dadurch gekennzeichnet, dass** die Kombinationsvorrichtung programmiert ist, um nur im Fall der Ermittlung mindestens einer Femtozelle beim Empfang der Parametrierung HCS durch das Endgerät zu arbeiten.

4. System der bevorzugten Auswahl einer Zelle eines Netzes nach einem der vorangegangenen Ansprüche, **dadurch gekennzeichnet, dass** das System eine Nivellierungsvorrichtung der durch die Parametrierung vom Typ HCS für mindestens zwei ermittelte Zellen mit unterschiedlichen Prioritäten durchgeführten Priorisierung und/oder eine Annullierungsvorrichtung der Parametrierung vom Typ HCS, die mindestens einer ermittelten Zelle zugeordnet ist, umfasst.

5. System der bevorzugten Auswahl einer Zelle eines Netzes nach einem der vorangegangenen Ansprüche, **dadurch gekennzeichnet, dass** das Auswahlsystem und seine Kombinationsvorrichtung in einem Endgerät eingebaut sind.

6. System der bevorzugten Auswahl einer Zelle eines Netzes nach einem der vorangegangenen Ansprüche, **dadurch gekennzeichnet, dass** das Auswahlsystem und seine Kombinationsvorrichtung im Netz integriert sind.

7. Verfahren der bevorzugten Auswahl einer Zelle eines Netzes, das ein System der bevorzugten Auswahl nach einem der vorangegangenen Ansprüche umsetzt, wobei das Verfahren umfasst:
- einen Schritt des Empfangs (S1) durch das Endgerät mindestens einer Parametrierung des Netzes, die die Parametrierung HCS einschließt, die dazu bestimmt ist, durch Festlegung eines Wertes für jede der Zellen des Netzes eine Priorisierung der verschiedenen Zellen zu erzeugen, die das Netz bilden,
- einen Schritt der Ermittlung (S2a) der Anwesenheit mindestens einer Zelle höherer Priorität innerhalb der Zellen des Netzes durch das Endgerät, die es erkennt,
- einen Schritt des Empfangs durch das Endgerät mindestens einer Parametrierung QOffset des Netzes,
**dadurch gekennzeichnet, dass** das Verfahren insbesondere umfasst:
- einen Schritt der Änderung (S4) des Feldqualitätsindexes mindestens einer vom Endgerät ermittelten Zelle, so dass die Zelle höchster Priorität vom Endgerät mit einem Feldqualitätsindex erkannt wird, der mindestens dem einer Zelle mit niedrigerer Priorität, die vom Endgerät ermittelt wurde, entspricht.

8. Verfahren der bevorzugten Auswahl nach vorangehendem Anspruch, **dadurch gekennzeichnet, dass** die ermittelte Zelle höchster Priorität eine Femtozelle ist.

9. Verfahren der bevorzugten Auswahl nach einem der vorangegangenen Ansprüche, wobei die ermittelte Zelle höchster Priorität eine Femtozelle ist, **dadurch gekennzeichnet, dass** das Verfahren vor allem umfasst:
- einen Schritt des Auslösen (S2c) des Empfangs (S3) einer Parametrierung QOffset, der von der Ermittlung einer Zelle höchster Priorität durch das Endgerät beim Empfang einer Parametrierung HCS, abhängt.

10. Verfahren der bevorzugten Auswahl nach einem der vorangegangenen Ansprüche, **dadurch gekennzeichnet, dass** das Verfahren insbesondere, vor dem Schritt der Änderung (S4) des Feldqualitätsindexes, umfasst:
- einen Schritt der Nivellierung (S2b) der Priorisierung durch die Parametrierung vom Typ HCS für mindestens zwei ermittelte Zellen mit unterschiedlichen Prioritäten durchgeführten Priorisierung und/oder der Annullierung der Parametrierung vom Typ HCS, die mindestens einer ermittelten Zelle zugeordnet ist.

11. Verfahren der bevorzugten Auswahl nach einem der vorangegangenen Ansprüche, **dadurch gekennzeichnet, dass** das Verfahren vor allem umfasst:
- einen Schritt des Kippens (S5) der Verbindung des Endgeräts zu einer Zelle, deren Priorität niedriger ist als die der Zelle höchster Priorität, aber mit einem Feldqualitätsindex, der mindestens dem der Zelle höchster Priorität entspricht.
